# EUROPÄISCHE PATENTANMELDUNG

(11) **EP 0 839 621 A2**
(43) Veröffentlichungstag der Anmeldung: **06.05.1998**
(21) Anmeldenummer: 97117440.4
(22) Anmeldetag: 09.10.1997
(51) Int. Cl.: B29B 17/00, C09J 7/02

(54) **Verwendung von Folien aus Recyclingmaterial zur Herstellung von Klebebändern**

(30) Priorität: 19.10.1996 DE 19643239
(71) Anmelder: Beiersdorf Aktiengesellschaft, 20245 Hamburg (DE)
(72) Erfinder: Wulf, Gerhard, 24943 Flensburg (DE)

(57) **Zusammenfassung**

Verwendung einer Folie zur Herstellung eines zumindest einseitig selbstklebend beschichteten Klebebandes, dadurch gekennzeichnet, daß die Folie zu einem Anteil von mindestens 10 Gew.-% aus Recyclingmaterial besteht, das aus Klebebändern und/oder Produktionsrückständen aus deren Herstellung sowie Klebebändern nach deren Anwendung besteht, wobei die Klebebänder jeweils einen Träger in Form einer Kunststoffolie aufweisen.

## Beschreibung

Die Erfindung betrifft die Verwendung einer Folie, die aus recycelten Materialien besteht, zur Herstellung eines Klebebandes, sowie das eigentliche Herstellungsverfahren des Klebebandes.

Die wiederholte Einführung Von Kunststoffabfällen in die Herstellung neuer Folien oder allgemeiner Produkte aus Kunststoff zählt zum Stand der Technik.

So wird beispielsweise in DE 40 20 602 C1 ein Verfahren beschrieben, mit dem duroplastische PUR-Weichschaumabfälle wiederaufbereitet werden. Die Weichschaumabfälle werden dazu zunächst einer Mühle zugeführt, in dieser auf Linsenform zerkleinert und anschließend unter Druck und erhöhter Temperatur zu reißfesten Folien verdichtet, ohne daß ein polymeres Bindemittel zugesetzt wird.
Derartige Folien werden zur Luftschalldämmung in lärmbelasteten Räumen oder Körperschalldämmung in Fahrzeugkarosserien sowie als Einleger in akustischen Feder-Masse-Systemen verwendet.
Die Verwendung dieser Folien als Trägermaterial für Klebebänder wird hingegen nicht vorgeschlagen.

Weiterhin ist bekannt, mit Klebstoff beschichtete Kunststoffabfälle zu verwerten.
In EP 0 430 199 A2 wird ein Verfahren offenbart, bei dem der mit Klebstoff mehr oder minder stark beschichtete Kunststoffabfall in Gegenwart einer den Klebstoff nicht lösenden Flüssigkeit zerkleinert wird, und die von der Flüssigkeit abgetrennten Abfallteilchen auf einen solchen Restflüssigkeitsgehalt eingestellt werden, daß noch eine Trennung der Teilchen voneinander möglich ist. Vorzugsweise besteht die rieselfähige Mischung aus thermoplastischem Kunststoffabfall im wesentlichen aus Schnitzeln, die einen Flüssigkeitsgehalt von 0,5 bis 5 Gew.-% aufweisen.
Anschließend wird die Weiterverarbeitung der Schnitzel vorgeschlagen, beispielsweise in Extrudern, Kalandern oder Spritzgußmaschinen, nachdem zuvor der Klebstoff abgetrennt wurde.

Ebenfalls offenbart WO 92/09413 ein Verfahren zum Recyceln von mit Klebstoff beschichteten Kunststoffolien, wobei die die Folien zunächst in Schnitzelform überführt werden und dann eine Trennung des Kunststoffmaterials und des Klebstoffs vorgesehen ist. Die Folienschnitzel werden dazu zunächst in ein Lösungsmittelbad eingebracht, in dem ein Walzen oder Kneten dieser erfolgt. Daran anschließend wird der in dem Lösungsmittel dispergierte Klebstoff durch die Einwirkung von Quetschkräften von den Folienschnitzeln abgetrennt.

Beiden Verfahren gemeinsam haftet aber der Nachteil an, daß stets eine Abtrennung des Klebstoffes erfolgen muß, bevor die Weiterverwendung des eingesetzten Materials erfolgen kann, die Verfahren dadurch vielstufig, also anlagen- und kostenintensiv werden.

Dementsprechend ist das Recycling von mit Klebstoff beschichteten Kunststoffolien, im folgenden Recyclingmaterial genannt, eher die Ausnahme. Derartige Rückstände entstehen bei der Herstellung von Klebebändern, beispielsweise die Randstreifen, die beim Zuschnitt der Mutterrollen in verkaufsfähige Einheiten anfallen, oder Fehlchargen aufgrund eines Fehlers im Produktionsprozeß. Weiterhin fallen solche Recyclingmaterialien bei der Anwendung der Klebebänder an, sei es als Verschnitt, sei als Reststücke auf einer Rolle. Diese Klebebandabschnitte können nach der Anwendung verschmutzt sein, sie können aber auch in reiner Form vorliegen.

Ein Beispiel für derartige 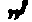 Abfälle" sind die im Automobilbau verwendeten selbstklebenden Folien, die während des Transports Teile des Fahrzeugs gegen äußere Einflüsse schützen. Derartige Folien weisen zumeist einen Träger auf Basis einer Kunststoffolie auf. Nach Erreichen des Zielortes werden die Fahrzeuge von den Folien befreit, die dementsprechend in großer Menge anfallen und anschließend entsorgt werden müssen.

Zweites, aktuelles Beispiel aus der Automobilindustrie: Rücknahme von beim Lackieren der Kraftfahrzeuge verwendeten Schutzfolien (Stoßstangen, Stoßdämpfer u.ä.).

Die genannten Rückstände werden zumeist der Deponierung zugeführt oder durch Verbrennung thermisch verwertet, ein stoffliches Recyceln erfolgt heute eher in Ausnahmefällen.

Demgemäß liegt der Erfindung die Aufgabe zugrunde, eine Möglichkeit aufzuzeigen, die erwähnten Rückstände auf eine Art stofflich zu recyceln, die die besonderen Eigenschaften dieser berücksichtigt.
Gelöst wird diese Aufgabe durch die Verwendung einer Folie, wie sie in Anspruch 1 dargelegt ist, als Trägermaterial für ein Klebeband. Vorteilhafte Ausführungsformen des Klebebands sind Gegenstand der Unteransprüche.

Demgemäß besteht die Folie, die zur Herstellung des zumindest einseitig selbstklebend beschichteten Klebebands eingesetzt wird, zu einem Anteil von zumindest 10 Gew.-% aus Recyclingmaterial.
Das Recyclingmaterial setzt sich dabei aus Klebebändern, Produktionsrückständen aus deren Herstellung sowie Klebebändern nach deren Anwendung zusammen, wobei die Klebebänder jeweils einen Träger in Form einer Kunststoffolie aufweisen.

Das Recyclingmaterial kann weiterhin zu einem Anteil von höchstens 25 Gew.-% Produktionsrückstände aus der Pflasterherstellung enthalten.

Daneben können aber auch unbeschichtete Kunststoffolien dem Recyclingmaterial zugesetzt sein. Insbesondere letztere erlauben, physikalische Eigenschaften der Folie durch die Auswahl und Zusammensetzung gezielt einzustellen.

Als Klebebänder oder Pflaster für das Recycling kommen solche in Frage, die Träger auf Basis einer Kunststoffolie einsetzen, die also bestehen aus
- Polypropylen (Homo- und Copolymerisate),
- Polyethylen (HDPE; LDPE; LLDPE; VLDPE; ULLDPE),
- beliebige Kombinationen aus Polypropylen und den genannten Polyethylen,
- Ethylenvinylacetat (EVA),
- Verbindungen von Ethylenvinylacetat mit Polypropylen und/oder Polyethylen,
- Etylen-Acrylsäure-Copolymeren (EAA),
- Ethylen-Methacrylsäure-Copolymeren (EMA) sowie
- Verbindungen aus Etylen-Acrylsäure-Copolymeren mit Ethylen-Methacrylsäure-Copolymeren und/oder Polypropylen und/oder Polyethylen.

Unabhängig davon, mit welchen der gängigen Klebmassen auf Lösungsmittel- Hotmelt- oder Acrylatbasis, oder mit welchen der wäßrigen Dispersionskleber die genannten Folien beschichtet sind, ist für die erfindungsgemäße Verwendung als Recyclingmaterial unerheblich.
Gegebenenfalls vorhandene Haftungsverbesserer (Vorstrich) oder Releasecoats sprechen ebenfalls nicht gegen die Verwertung.

Der neben dem genannten Recyclingmaterial gegebenenfalls vorhandene zweite Bestandteil der Folien wird von reinen, nicht recycelten Granulaten der aufgeführten Polymere gebildet, wobei je nach späterem Einsatzzweck des Klebebandes eine gezielte Abmischung und Auswahl getroffen werden kann.

Eine weitere Verbesserung der Eigenschaften der Folie, insbesondere der Festigkeit, wird erreicht, indem die Folie in Längsrichtung gereckt ist, vorzugsweise im Bereich von 1:2 bis 1:10, und indem der Folie UV-Stabilisatoren und/oder Antioxidantien zugesetzt werden.

Auch die Coextrusion mit zusätzlichen Schichten vermag die Festigkeit zu steigern. Als Einsatzmaterialien für die Coextrusion werden o.g. Rohstoffe, ggf. mit Hilfe von Haftvermittlern verwendet.

Schließlich wird auch das Verfahren zur Herstellung eines erfindungsgemäßen Klebebandes vom Erfindungsgedanken umfaßt.
Dazu wird das Recyclingmaterial zunächst mittels eines Plastagglomerators in einer Heißagglomeration zu einem Agglomerat zerkleinert, anschließend das Agglomerat zu einer Folie extrudiert. Die Extrusion wird vorzugsweise in einem Doppelschneckenextruder mit zumindest einer Entgasungsstation durchgeführt. In dem Doppelschneckenextruder wird auch der gegebenenfalls notwendige zweite Bestandteil der Folie in Form von reinem, nicht recyceltem Granulat zugesetzt.

Die Zahl der Entgasungsstationen - vorzugsweise ein bis drei - ist abhängig von der Menge an Klebemasse, die auf den jeweiligen Folien des Recyclingmaterials aufgetragen ist.
Nach dieser Menge richtet sich nämlich die anfallende, und die damit zu entsorgende Abgasmenge.

Abschließend wird die Folie mit einer selbstklebenden Beschichtung ein- oder doppelseitig beschichtet.
Dazu können alle Arten von Klebern Verwendung finden,
- Lösungsmittelklebersysteme auf Natur- und/oder Synthesekautschuksystemen,
- Hotmeltklebersysteme,
- Acrylatklebersysteme,
- wäßrige Dispersionskleber,
- Silikonklebersysteme,
- Polyurethanklebersysteme.

Falls es notwendig erscheint, können auch die erfindungsgemäßen Klebebänder Vorstriche zur Verbesserung der Haftungsfähigkeit der Kleber aufweisen. Bei Folien, die aus 70 Gew.-% bis 100 Gew.-% Recyclingmaterial bestehen, kann wegen der Restklebrigkeit des Folie auf einen Vorstrich verzichtet werden.

Bei einseitig beschichteten Klebebändern kann die andere Trägerseite mit Trennlacken versehen sein, die die Schonung der Folienoberfläche und das erleichterte Abrollen des Bandes bewirken.
Bei doppelseitig beschichteten Klebebändern wird ein Trennpapier zwecks der Wiederabrollbarkeit des Klebebands eingesetzt.

Zum Einfärben der Trägenfolie der Klebebänder können Farbbatches und/oder Coextrusionsverfahren eingesetzt werden.

Zur besseren Verankerung der aufgeführten Beschichtungsmaterialien - einschließlich von Druckfarben - ist darüber hinaus eine Oberflächenvorbehandlung (Corona-, Flamm- oder Plasmavorbehandlung) vorgesehen.

Die Verarbeitungsparameter (Extrusionstemperatur, Kühl-, Reck- und Fixierbedingungen) für die unterschiedlichen Materialzusammensetzungen werden für jede Mischung gezielt vorgegeben. Die Ermittlung der hierfür notwendigen Daten erfolgt mit dem Ziel der Reproduzierbarkeit in Versuchen.

Die erfindungsgemäßen Folien eignen sich bevorzugt zur Herstellung von Klebebändern, an die geringe optische Anforderungen gestellt werden. Vorzugsweise erfolgt der Einsatz als Verpackungsklebebänder, Teppichverlegebänder, Abdeckbänder, Aufreißstreifen und Tragegriffe.

Folien, die aus den aufgeführten Produktionsrückständen hergestellt werden, sind als Träger für Klebebänder hervorragend geeignet, was auch für den Fachmann nicht vorherzusehen war.
Durch den Zusatz von neuen Edukten zu den recycelten Klebebänder lassen sich abhängig von der Art und der Qualität dieser Klebebänder die Eigenschaften der neuen Folie gezielt einstellen. Damit einher geht die Tatsache, daß somit auch unmittelbar auf die Güte des neuen Klebebandes Einfluß genommen wird.
Aber auch Folien, die zu 100 Gew.-% aus Recyclingmaterial bestehen, können als Träger Verwendung finden, insbesondere wenn die späteren Anforderungen an das Produkt nicht zu hoch sind.

Somit ist eine Möglichkeit, die in erheblichen Mengen anfallenden Produktionsrückstände aus der Klebeband- und Pflasterherstellung stofflich in großem Umfang zu verwerten. Dabei werden ökologische und ökonomische Gesichtspunkte berücksichtigt, wie beispielsweise die Forderung nach der Reduzierung der Abfallmengen. Zum einen werden die bei der Herstellung von Klebebändern entstehenden Abfallmengen reduziert, gleichzeitig damit auch die anfallenden Entsorgungskosten.

Das erfindungsgemäße Klebeband kann selbst auch wieder recycelt werden.

Im folgenden soll anhand eines Beispiels die Herstellung eines erfindungsgemäßen Klebebands dargestellt werden, ohne in irgendeiner Form einschränkend wirken zu sollen.

### Beispiel

### 1. Herstellung der Recycling-Folie:

Mit Klebemittel beschichtete Reststoffe aus der Klebebandherstellung, und zwar tesapack ® 125 braun und farblos sowie tesapack ® 4287, 4288, 4289 und 4298, wurden mittels eines Plastagglomerators in einer Heißagglomerisation zu einem riesel- und dosierfähigen Agglomerat zerkleinert. Zzur Durchführung wurde ein Gerät der Firma Pallmann in Zweibrücken verwendet, das sich aus einer Schneidmühle (Typ PS 4-5/F WR 3), einem Plastagglomerator (Typ PFV9 und einem Heißgranulator (Typ PS 4-5/F 5 S) zusammensetzt.
Das Trägermaterial wurde bei den genannten Produkten gebildet von einer Polypropylenfolie aus Copolymeren, die Beschichtung bestand aus Lösungsmittelklebern auf Naturkautschukbasis und synthetischen Kohlenwasserstoffharzen.

Das Agglomerat wurde zu einer Folie extrudiert. Dabei kam ein Doppelschneckenextruder (Typ D2 - 72-18 17V der Firma esde in Bad Oeynhausen) mit einer Entgasungsstation zum Einsatz, wobei letztere mit Unterdruck betrieben wird. Die Entgasung wurde erforderlich, weil Teile der Klebemasse, die in dieser enthaltenen Restlösungsmittel, aufgrund der vom Trägermaterial abhängigen Verarbeitungstemperatur von um 230 °C in die Gasphase übergingen. Mit der Entgasungsstation war die Gefahr der Gasansammlung und der daraus resultierenden Explosionsgefahr gebannt.
Die in dem Extruder hergestellte Folie bestand also zu 100 Gew.-% aus Recyclingmaterial.

Das durch die Entgasungsstation abgezogene Gas wurde in ein Wasserbad geleitet, das Wasser wurde vor dem Ablassen im Labor untersucht und gegebenenfalls neutralisiert, um Umweltschäden zu vermeiden. Ein Abblasen der Abluft wurde somit vermieden.

### 2. Beschichtung der Recycling-Folie

Die hergestellte Folie wurde in einer Kanalanlage zu einem Teppichklebeband beschichtet. Es wurde ein Lösungsmittelkleber verwendet.

Die Verarbeitungsparameter sind vom Träger und von der eingesetzten Klebemasse abhängig. Das an einer Technikumsanlage hergestellte Klebeband wurde mit einer Bahngeschwindigkeit im Bereich 55 bis 60 m/min bei Trocknungstemperaturen in den Kanalsektionen zwischen 35 und 90 °C hergestellt. Die Beschränkungen bezüglich der Produktionsgeschwindigkeit waren anlagen-, nicht materialabhängig.

## Patentansprüche

1. Verwendung einer Folie zur Herstellung eines zumindest einseitig selbstklebend beschichteten Klebebandes, dadurch gekennzeichnet, daß die Folie zu einem Anteil von mindestens 10 Gew.-% aus Recyclingmaterial besteht, das aus Klebebändern und/oder Produktionsrückständen aus deren Herstellung sowie Klebebändern nach deren Anwendung besteht, wobei die Klebebänder jeweils einen Träger in Form einer Kunststoffolie aufweisen.

2. Verwendung nach Anspruch 1, dadurch gekennzeichnet, daß
das Recyclingmaterial zu einem Anteil von höchstens 25 Gew.-% Produktionsrückstände aus der Pflasterherstellung enthält.

3. Verwendung nach Anspruch 1, dadurch gekennzeichnet, daß
das Recyclingmaterial versetzt ist mit unbeschichteten Kunststoffolien.

4. Verwendung nach Anspruch 1, dadurch gekennzeichnet, daß
die Folie in Längsrichtung gereckt ist, insbesondere im Bereich von 1:2 bis 1:10.

5. Verwendung nach Anspruch 1, dadurch gekennzeichnet, daß
der Folie UV-Stabilisatoren und/oder Antioxidantien zugesetzt sind.

6. Verfahren zur Herstellung eines Klebebandes nach Anspruch 1,
wobei das Recyclingmaterial zunächst mittels eines Plastagglomerators in einer Heißagglomeration zu einem Agglomerat zerkleinert wird,
wobei das Agglomerat zu einer Folie extrudiert wird,
wobei die Folie mit einer selbstklebenden Beschichtung beschichtet wird.

7. Verfahren zur Herstellung eines Klebebandes nach Anspruch 1, dadurch gekennzeichnet, daß
die Extrusion in einem Doppelschneckenextruder mit zumindest einer Entgasungsstation durchgeführt wird.

8. Verfahren zur Herstellung eines Klebebandes nach Anspruch 1, dadurch gekennzeichnet, daß
dem Recyclingmaterial in einem Einschnecken- oder Doppelschneckenextruder reines, nicht recyceltes Kunststoffgranulat zugesetzt wird.
